# EUROPEAN PATENT SPECIFICATION

(11) **EP 4 164 149 B1**
(45) Date of publication and mention of the grant of the patent: **26.08.2026**
(21) Application number: 21831829.3
(22) Date of filing: 13.04.2021
(51) Int. Cl.: H04L 41/08, H04L 41/084

(54) **METHOD AND DEVICE FOR AUTOMATICALLY CONFIGURING FLEXIBLE ETHERNET (FLEXE)**
VERFAHREN UND VORRICHTUNG ZUR AUTOMATISCHEN KONFIGURATION VON FLEXIBLEM ETHERNET (FLEXE)
PROCÉDÉ ET DISPOSITIF DE CONFIGURATION AUTOMATIQUE ETHERNET FLEXIBLE (FLEXE)

(30) Priority: 03.07.2020 CN 202010631349
(43) Date of publication of application: 12.04.2023
(73) Proprietor: Huawei Technologies Co., Ltd., Longgang District, Shenzhen, Guangdong 518129 (CN)
(72) Inventor: XING, Fei, Shenzhen, Guangdong 518129 (CN)
(74) Representative: Goddar, Heinz J.
(86) International application number: PCT/CN2021/086870
(87) International publication number: WO 2022/001285

(56) References cited:
- WO-A1-2019/024930
- WO-A1-2019/076046
- WO-A1-2019/242368
- CN-A- 109 120 657
- CN-A- 109 379 214
- CN-A- 109 981 208
- CN-A- 110 351 141
- CN-A- 110 650 002
- CN-A- 111 107 641
- US-A1- 2021 111 963

## Description

### TECHNICAL FIELD

This application relates to the communications field, and in particular, to a flexible ethernet FlexE information automatic configuration method and an apparatus.

### BACKGROUND

A flexible ethernet (Flexible Ethernet, FlexE) technology has an advantage of on-demand bandwidth allocation, and can meet requirements of network scenarios such as mobile bearer, home broadband, and dedicated line access. Therefore, the FlexE technology is about to be applied more widely.

The FlexE technology may be deployed on two physical interfaces that are in a neighbor relationship, so that the two physical interfaces communicate with each other by using the FlexE technology. When the FlexE technology is deployed on the two physical interfaces, FlexE information needs to be configured for the two physical interfaces. In addition, the two physical interfaces can communicate with each other by using the FlexE technology only when FlexE information configured on the two physical interfaces is the same.

Currently, FlexE information is usually manually configured for a physical interface. However, efficiency of this configuration manner is low.

CN 110351141 A discloses a FlexE interface management method and device, and a network element, and relates to the technical field of communications, the method comprising: if a new downstream network element is detected, sending a parameter range of configuration parameters to the new downstream network element, the new downstream network element comprising a new FlexE interface, the configuration parameters being used for configuring the FlexE interface; receiving parameters selected by the new downstream network element based on the parameter range; updating local configuration for the new FlexE interface according to the selected parameters, and updating a local parameter range at the same time.

WO 2019/076046 A1 discloses a transmission path configuration method, apparatus and device. Said method comprises: a first node device receiving a first message sent by a second node device; if the priority of the first node device is higher than the priority of the second node device, the first node device determining a first group number and a first physical layer (PHY) number of each first port in the N first ports; and the first node device sending a second message to the second node device, the second message being used to trigger the second node device to determine a second group number and a second physical layer (PHY) number of each second port in the N second ports.

### SUMMARY

The present invention is defined in the appended independent claims to which reference should be made. Advantageous features are set out in the appended dependent claims. Embodiments of this application provide a FlexE automatic configuration method and an apparatus, to improve FlexE information configuration efficiency.

### BRIEF DESCRIPTION OF DRAWINGS

To describe the technical solutions in embodiments of this application or in a conventional technology more clearly, the following briefly describes the accompanying drawings used to describe embodiments or the conventional technology.
FIG. 1 is a schematic diagram of an example application scenario according to an embodiment of this application;
FIG. 2 is a signaling exchange diagram of a FlexE information automatic configuration method according to an embodiment of this application;
FIG. 3a is a schematic diagram of an extended TLV according to an embodiment of this application;
FIG. 3b is a schematic diagram of another extended TLV according to an embodiment of this application;
FIG. 3c is a schematic diagram of a sub-TLV of a FlexE interface according to an embodiment of this application;
FIG. 4 is a signaling exchange diagram of another FlexE information automatic configuration method according to an embodiment of this application;
FIG. 5A and FIG. 5B is a signaling exchange diagram of another FlexE information automatic configuration method according to an embodiment of this application;
FIG. 6A and FIG. 6B is a signaling exchange diagram of another FlexE information automatic configuration method according to an embodiment of this application;
FIG. 7A and FIG. 7B is a signaling exchange diagram of another FlexE information automatic configuration method according to an embodiment of this application;
FIG. 8A and FIG. 8B is a signaling exchange diagram of another FlexE information automatic configuration method according to an embodiment of this application;
FIG. 9 is a schematic flowchart of a FlexE information automatic configuration method according to an embodiment of this application;
FIG. 10 is a schematic flowchart of a FlexE information automatic configuration method according to an embodiment of this application;
FIG. 11 is a schematic diagram of a structure of a communication apparatus according to an embodiment of this application;
FIG. 12 is a schematic diagram of a structure of a communication apparatus according to an embodiment of this application;
FIG. 13 is a schematic diagram of a structure of a communication apparatus according to an embodiment of this application;
FIG. 14 is a schematic diagram of a structure of a communication apparatus according to an embodiment of this application;
FIG. 15 is a schematic diagram of a structure of a communication apparatus according to an embodiment of this application; and
FIG. 16 is a schematic diagram of a structure of a communication apparatus according to an embodiment of this application.

### DESCRIPTION OF EMBODIMENTS

Embodiments of this application provide a FlexE automatic configuration method and an apparatus, to improve FlexE information configuration efficiency.

For ease of understanding, possible application scenarios of embodiments of this application are first described.

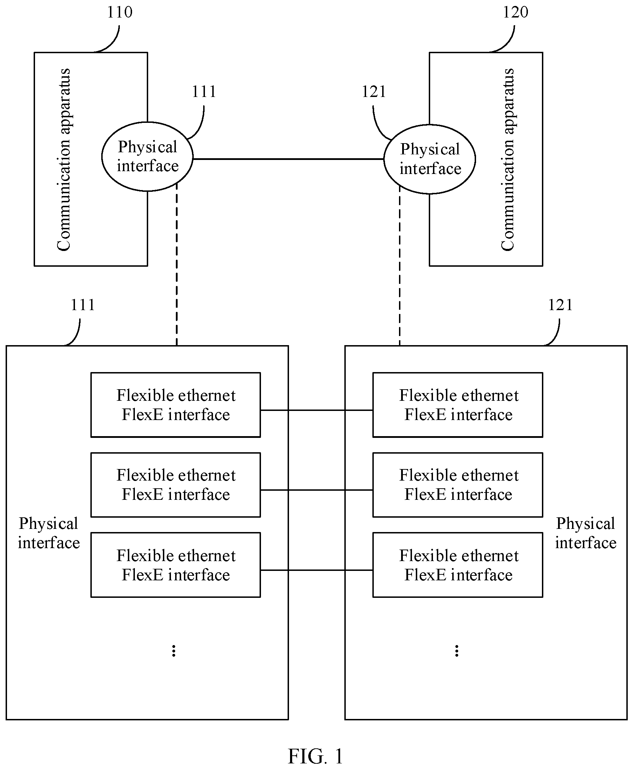

FIG. 1 is a schematic diagram of an example application scenario according to an embodiment of this application.

As shown in FIG. 1, a communication apparatus 110 may communicate with a communication apparatus 120. The communication apparatus 110 may include at least one physical interface. FIG. 1 shows a physical interface 111. The communication apparatus 120 may include at least one physical interface. FIG. 1 shows a physical interface 121. In an example, the communication apparatus 110 may communicate with the communication apparatus 120 through the physical interface 111. Correspondingly, the communication apparatus 120 may communicate with the communication apparatus 110 through the physical interface 121.

In some embodiments, a FlexE technology may be deployed on the physical interface 111 and the physical interface 121, so that the physical interface 111 and the physical interface 121 can communicate with each other by using the FlexE technology.

An implementation of deploying the FlexE technology on the physical interface 111 is as follows: The physical interface 111 may be added to a FlexE group (group). After the physical interface 111 is added to the FlexE group, at least one logical interface may be established for the physical interface 111. The logical interface herein may also be referred to as a "FlexE interface". After the at least one FlexE interface is established for the physical interface 111, the communication apparatus 110 may perform FlexE configuration on the physical interface 111. Correspondingly, an implementation of deploying the FlexE technology on the physical interface 121 is as follows: The physical interface 121 may be added to a FlexE group, and after the physical interface 121 is added to the FlexE group, at least one FlexE interface may be established for the physical interface 121. After the at least one FlexE interface is established for the physical interface 121, the communication apparatus 120 may perform the FlexE configuration on the physical interface 121. When the FlexE configuration is performed on both the physical interface 111 and the physical interface 121, and FlexE configuration information of the physical interface 111 is consistent with FlexE configuration of the physical interface 121, the physical interface 111 and the physical interface 121 may communicate with each other by using the FlexE technology.

Currently, the FlexE configuration may be manually performed on the physical interface 111 and the physical interface 121. However, in the manual configuration manner, configuration efficiency is greatly affected by a subjective factor such as experience of configuration personnel, and therefore the configuration efficiency is low. In addition, because there are many physical interfaces on which the FlexE technology is deployed in a network, if each physical interface is manually configured, FlexE configuration efficiency of the entire network is low.

It should be noted that the communication apparatus mentioned in embodiments of this application, for example, the communication apparatus 110 and the communication apparatus 120 shown in FIG. 1, may be a network device such as a switch or a router, or may be a part of components on a network device, for example, a board or a line card on the network device, or may be a functional module on the network device. This is not specifically limited in embodiments of this application.

In view of this, embodiments of this application provide a FlexE automatic configuration method. The following describes the method with reference to the accompanying drawings.

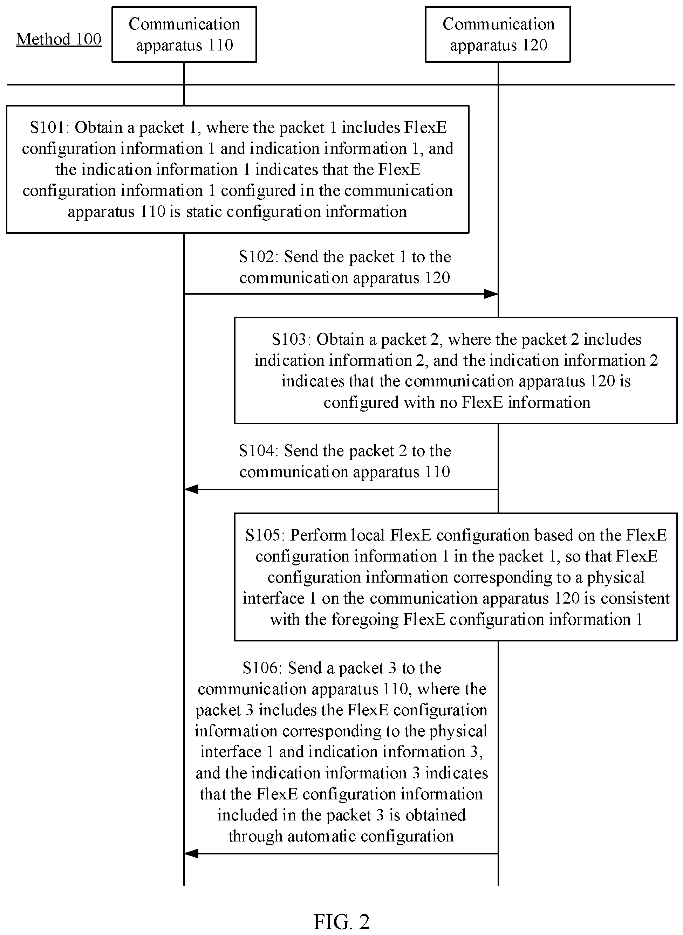

FIG. 2 is a signaling exchange diagram of a FlexE information automatic configuration method according to an embodiment of this application.

The method 100 shown in FIG. 2 may be, for example, implemented through the following S101 to S106.

S101: The communication apparatus 110 obtains a packet 1, where the packet 1 includes FlexE configuration information 1 and indication information 1, and the indication information 1 indicates that the FlexE configuration information 1 configured in the communication apparatus 110 is static configuration information.

In this embodiment of this application, the communication apparatus 110 may generate the packet 1. In an example, the communication apparatus 110 may obtain the FlexE configuration information 1 and the indication information 1, and generate the packet 1 including the FlexE configuration information 1 and the indication information 1. The FlexE configuration information 1 mentioned herein is used to perform FlexE configuration on a physical interface on the communication apparatus 110. For example, in the scenario shown in FIG. 1, the FlexE configuration information 1 may be used to perform the FlexE configuration on the physical interface 111. In the following embodiment, an example in which the FlexE configuration information 1 configured in the communication apparatus 110 is used to perform the FlexE configuration on the physical interface 111 is used for description. The physical interface 111 is an interface 2 mentioned below.

The indication information 1 mentioned in this embodiment of this application indicates that the FlexE configuration information 1 configured in the communication apparatus 110 is the static configuration information. The static configuration information mentioned herein may be manually configured by configuration personnel, or may be configured by a communication apparatus according to an instruction of another device such as a control management device. This is not specifically limited in this embodiment of this application. In this embodiment of this application, the indication information 1 may be carried by using a field of the packet 1. For example, the packet 1 includes a field A, and the field A is used to carry a configuration mode of FlexE information. When a value of the field A is a first value, it indicates that the configuration mode of the FlexE information is static configuration. In other words, when the value of the field A in the packet 1 is the first value, it indicates that the FlexE configuration information 1 configured in the communication apparatus 110 is the static configuration information.

The first FlexE configuration information is not specifically limited in this embodiment of this application. In one aspect, as described above, the FlexE configuration information 1 is used to perform the FlexE configuration on the physical interface 111 on the communication apparatus 110. Therefore, in some embodiments, the first FlexE configuration information may include information about the physical interface 111 of the communication apparatus 110. In another aspect, it may be learned from the foregoing descriptions of the FlexE technology that at least one FlexE interface may be established for the physical interface 111 on the communication apparatus 110. Therefore, the FlexE configuration information 1 may further include information about the at least one FlexE interface established for the physical interface 111 on the communication apparatus 110.

In this embodiment of this application, the information about the physical interface 111 may include, for example, an identifier of a FlexE group to which the physical interface 111 belongs, and the information about the physical interface 111 may include, for example, a physical layer (physical, PHY) number of the physical interface 111.

In this embodiment of this application, the information about the FlexE interface may include, for example, one or more of a bandwidth configuration mode of the FlexE interface, a slot granularity, a sequence number of the FlexE interface, an identifier of a FlexE group to which the FlexE interface belongs, a bandwidth of the FlexE interface, a physical interface bound to the FlexE interface, a slot bound to the FlexE interface, and an identifier of the FlexE interface.

The bandwidth configuration mode of the FlexE interface can be a bandwidth mode or a slot mode.

The bandwidth mode means that a specific bandwidth is directly configured for the FlexE interface. For example, a bandwidth corresponding to a FlexE interface 1 is 10 M. When the bandwidth configuration mode of the FlexE interface is the bandwidth mode, a parameter of the FlexE interface may include the bandwidth of the FlexE interface. In other words, when the bandwidth configuration mode of the FlexE interface is the bandwidth mode, the bandwidth of the FlexE interface is a valid parameter.

The slot mode means that the FlexE interface is bound to a slot. For example, a bandwidth resource of the physical interface 111 is divided into 10 slots, and three of the 10 slots are bound to the FlexE interface 1. When the bandwidth configuration mode of the FlexE interface is the slot mode, the parameter of the FlexE interface may include the foregoing slot bound to the FlexE interface. In other words, when the bandwidth configuration mode of the FlexE interface is the slot mode, the slot bound to the FlexE interface is a valid parameter.

The FlexE technology is deployed on physical interfaces that are in a neighbor relationship, and two physical interfaces that are in the neighbor relationship may send a link layer discovery protocol (Link Layer Discovery Protocol, LLDP) packet to each other. Therefore, in an implementation of this embodiment of this application, the packet 1 may be an LLDP packet. In addition, after the two physical interfaces that are in the neighbor relationship successfully communicate with each other by using the FlexE technology, the two physical interfaces may send a FlexE overhead frame to each other. Therefore, in an implementation of this embodiment of this application, the packet 1 may alternatively be a FlexE overhead frame. In addition, the two physical interfaces that are in the neighbor relationship may send an ethernet in the first mile (the ethernet in the first mile, EFM) packet to each other. Therefore, in another implementation of this embodiment of this application, the packet 1 may alternatively be an EFM packet.

In this embodiment of this application, if before S101, the communication apparatus 110 and the communication apparatus 120 already can communicate with each other by using the FlexE technology, to be specific, a FlexE connection between the communication apparatus 110 and the communication apparatus 120 has been established, the packet 1 may be any one of the LLDP packet, the FlexE overhead frame, or the EFM packet. If before S101, the FlexE connection between the communication apparatus 110 and the communication apparatus 120 has not been established, the FlexE overhead frame cannot be transmitted between the communication apparatus 110 and the communication apparatus 120. In this case, the packet 1 may be the LLDP packet or the EFM packet.

It should be noted that a "packet" in this embodiment of this application, for example, a packet 2 to a packet 9 mentioned below, is similar to the packet 1, and may be any one of an LLDP packet, a FlexE overhead frame, or an EFM packet. In the following embodiment, for the packet 2 to the packet 9, refer to the description part of the packet 1 herein. Details are not described one by one.

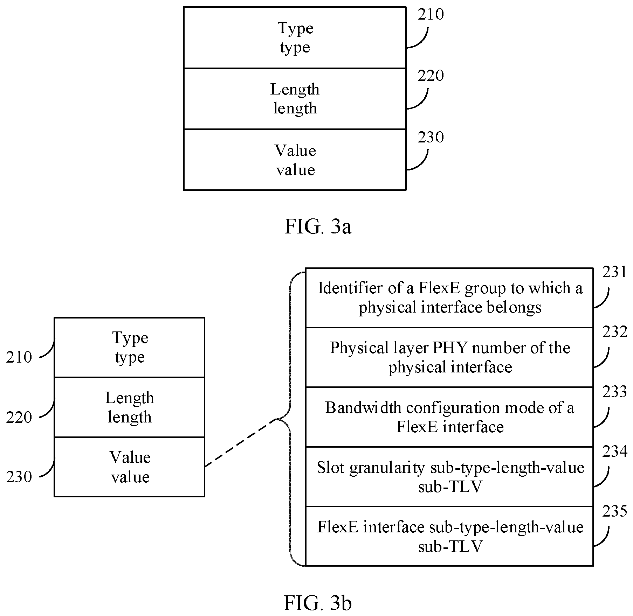

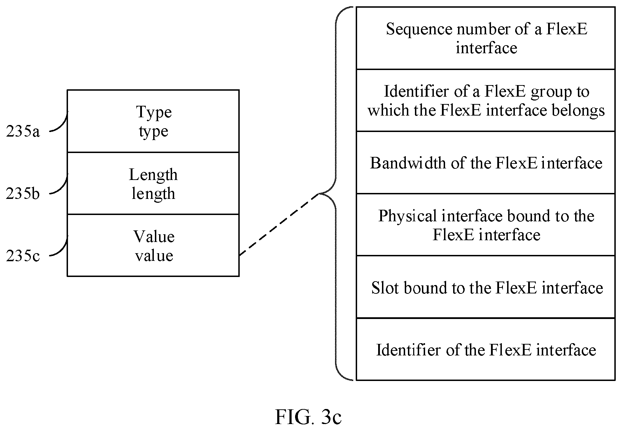

In this embodiment of this application, the FlexE configuration information 1 may be carried in a specific field of the packet 1. In an example, the FlexE configuration information 1 may be carried in an extended type-length-value (type-length-value, TLV) of the packet 1. For example, FIG. 3a is a schematic diagram of an extended TLV according to an embodiment of this application. A type field 210 of the extended TLV shown in FIG. 3a indicates that a type of the extended TLV is FlexE configuration information. A length field 220 is used to carry a length of the FlexE configuration information 1, and a value field 230 is used to carry the FlexE configuration information 1. In some embodiments, a value field of the extended TLV of the packet 1 may include several sub (sub)-TLVs. For example, the value field of the extended TLV may include a sub-TLV used to carry a slot granularity. For another example, the value field sub of the extended TLV may include a sub-TLV used to carry FlexE interface information. Reference may be made to FIG. 3b for understanding. FIG. 3b is a schematic diagram of another extended TLV according to an embodiment of this application. As shown in FIG. 3b, a value field 230 of the extended TLV includes an identifier 231 of a FlexE group to which a physical interface belongs, a PHY number 232 of the physical interface, a bandwidth configuration mode 233 of a FlexE interface, a slot granularity sub-TLV 234, and a FlexE interface sub-TLV 235. The slot granularity sub-TLV 234 is used to carry a slot granularity, and the FlexE interface sub-TLV 235 is used to carry FlexE interface information. For the sub-TLV 235, reference may be made to FIG. 3c for understanding. FIG. 3c is a schematic diagram of a sub-TLV of a FlexE interface according to an embodiment of this application. In FIG. 3c, a type field 235a indicates that a type of the sub-TLV is FlexE interface information, and a length field 235b is used to carry a length of a value field 235c. In a specific example, the value field 235c may be used to carry, for example, a sequence number of the FlexE interface, an identifier of a FlexE group to which the FlexE interface belongs, a bandwidth of the FlexE interface, a physical interface bound to the FlexE interface, a slot bound to the FlexE interface, and an identifier of the FlexE interface shown in FIG. 3c. It should be noted herein that FIG. 3a to FIG. 3c are merely shown for ease of understanding, and do not constitute a limitation on this embodiment of this application. An extended TLV is not limited to that shown in FIG. 3b, and a sub-TLV of a FlexE interface is not limited to that shown in FIG. 3c.

S102: The communication apparatus 110 sends the packet 1 to the communication apparatus 120.

After the communication apparatus 110 sends the packet 1 to the communication apparatus 120, the communication apparatus 120 may obtain the FlexE configuration information 1.

In this embodiment of this application, the communication apparatus 110 may directly send the packet 1 to the communication apparatus 120 over a link directly connected to the communication apparatus 120. For example, the communication apparatus 110 sends the packet 1 to the physical interface 121 of the communication apparatus 120 through the physical interface 111.

In this embodiment of this application, the communication apparatus 110 may alternatively first send the packet 1 to a control management device, and the control management device sends the packet 1 to the communication apparatus 120.

S103: The communication apparatus 120 obtains the packet 2, where the packet 2 includes indication information 2, and the indication information 2 indicates that the communication apparatus 120 is configured with no FlexE information.

S104: The communication apparatus 120 sends the packet 2 to the communication apparatus 110.

Similar to the indication information 1, the indication information 2 may be carried by using a field of the packet 2. In an example, the packet 2 includes a field A, and the field A is used to carry a configuration mode of the FlexE information. When a value of the field A is a second value, it indicates that no FlexE information is configured currently. In other words, when the value of the field A in the packet 2 is the second value, it indicates that the communication apparatus 120 is configured with no FlexE information. The second value mentioned herein is not equal to the first value mentioned above. In another example, the packet 2 includes a field B, and the field B is used to carry the configuration mode of the FlexE information.

With respect to S101 to S104, it should be noted that a specific execution sequence of the four steps is not limited to that shown in FIG. 1, provided that S102 is performed after S101 and S104 is performed after S103. For example, an execution sequence of the four steps may be: S101-S103-S104-S102.

S105: The communication apparatus 120 performs local FlexE configuration based on the FlexE configuration information 1 in the packet 1, so that FlexE configuration information corresponding to a physical interface 1 on the communication apparatus 120 is consistent with the foregoing FlexE configuration information 1.

After receiving the packet 1, the communication apparatus 120 may learn, based on the packet 1, that the FlexE configuration information 1 has been configured in the communication apparatus 110, and the FlexE configuration information 1 is the static configuration information. However, the communication apparatus 120 is not locally configured with the FlexE information. In this case, the communication apparatus 120 may automatically perform FlexE configuration based on the packet 1, so that the FlexE configuration information corresponding to the physical interface 1 on the communication apparatus 120 is consistent with the FlexE configuration information 1. In this way, the physical interface 1 on the communication apparatus 120 can communicate with the physical interface 2 on the communication apparatus 110 by using the FlexE technology. The physical interface 1 mentioned herein may be, for example, the physical interface 121 shown in FIG. 1, and the physical interface 2 mentioned herein may be, for example, the physical interface 111 shown in FIG. 1.

S106: The communication apparatus 120 sends a packet 3 to the communication apparatus 110, where the packet 3 includes the FlexE configuration information corresponding to the physical interface 1 and indication information 3, and the indication information 3 indicates that the FlexE configuration information included in the packet 3 is obtained through automatic configuration.

After performing the local FlexE configuration based on the packet 1, the communication apparatus 120 may generate the packet 3, where the packet 3 includes the FlexE configuration information corresponding to the physical interface 1 and the indication information 3, and send the packet 3 to the communication apparatus 110.

In this embodiment of this application, the FlexE configuration information corresponding to the physical interface 1 may be carried in an extended TLV of the packet 3. For the extended TLV of the packet 3, refer to the foregoing description part of the extended TLV of the packet 1. Details are not described herein again.

In this embodiment of this application, the indication information 3 indicates that the FlexE configuration information included in the packet 3 is obtained through the automatic configuration. Similar to the indication information 1 and the indication information 2, the indication information 3 may be carried by using a field of the packet 3. In an example, the packet 3 includes a field A, and the field A is used to carry a configuration mode of FlexE information. When a value of the field A is a third value, it indicates that the FlexE configuration information is obtained through the automatic configuration. In other words, when the value of the field A in the packet 3 is the third value, it indicates that the communication apparatus 120 performs FlexE configuration on the physical interface 1 in an automatic configuration manner. The third value mentioned herein is different from the first value and the second value mentioned above. In another example, the packet 3 includes a field C, and the field C is used to carry the configuration mode of the FlexE information.

It can be learned from the foregoing descriptions that, in this embodiment of this application, when the communication apparatus 110 is statically configured with the FlexE configuration information 1, there is no need to continue to statically configure FlexE configuration information for the communication apparatus 120 in a manner such as manual configuration. The communication apparatus 120 may automatically perform the FlexE configuration on the physical interface 1 on the communication apparatus 120 based on the FlexE configuration information 1 in the packet 1, so that efficiency of performing the FlexE configuration on the physical interface 1 on the communication apparatus 120 is improved.

It should be noted that, after S101 to S106 are performed, the communication apparatus 110 may periodically perform S101 and S102. Correspondingly, the communication apparatus 120 may periodically perform S106.

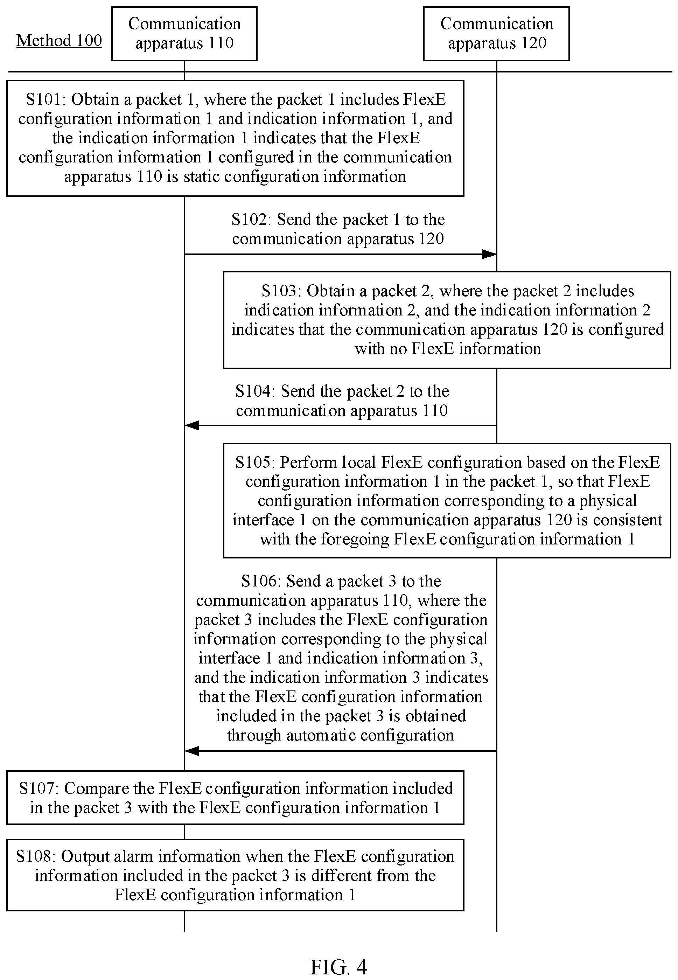

In an implementation of this embodiment of this application, in addition to S101 to S106, the method 100 may further include S107 and S108. FIG. 4 is a signaling exchange diagram of another FlexE information automatic configuration method according to an embodiment of this application.

S107: The communication apparatus 110 compares the FlexE configuration information included in the packet 3 with the FlexE configuration information 1.

S108: The communication apparatus 110 outputs alarm information when the FlexE configuration information included in the packet 3 is different from the FlexE configuration information 1.

In this embodiment of this application, in one aspect, after S106 is performed, the FlexE configuration information corresponding to the physical interface 1 of the communication apparatus 120 may be modified, for example, be maliciously tampered with. In another aspect, when the communication apparatus 120 performs the local FlexE configuration based on the packet 1, an abnormal configuration may occur. For example, a specific parameter is incorrectly configured. In this case, the FlexE configuration information 1 locally configured on the communication apparatus 110 may be inconsistent with FlexE configuration information locally configured on the communication apparatus 120. As a result, the communication apparatus 110 and the communication apparatus 120 cannot communicate with each other by using the FlexE technology. To reduce a negative impact caused by this case, in this embodiment of this application, after receiving the packet 3, the communication apparatus 110 may compare the FlexE configuration information included in the packet 3 with the FlexE configuration information 1. If the FlexE configuration information included in the packet 3 and the FlexE configuration information 1 are different, the communication apparatus 110 may output the alarm information to remind maintenance personnel to perform timely processing, to avoid that the communication apparatus 110 and the communication apparatus 120 cannot communicate with each other by using the FlexE technology for a long time.

In this embodiment of this application, the communication apparatus 110 may output the alarm information in a plurality of implementations. In an example, the communication apparatus 110 may send the alarm information to the control management device. In another example, the communication apparatus 110 may control a speaker to play alarm audio, and the like. This is not specifically limited in this embodiment of this application.

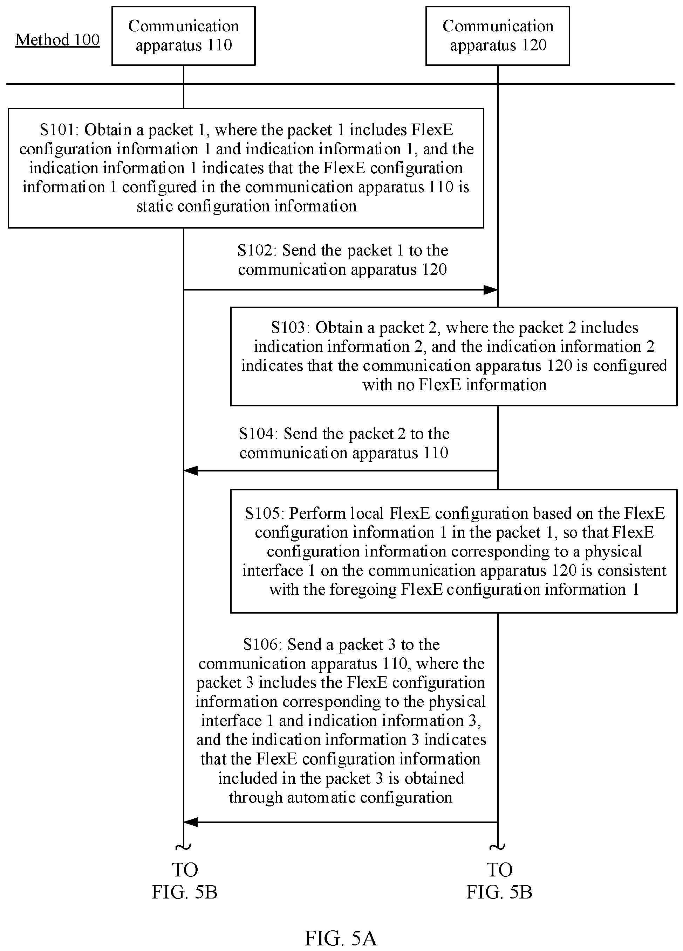

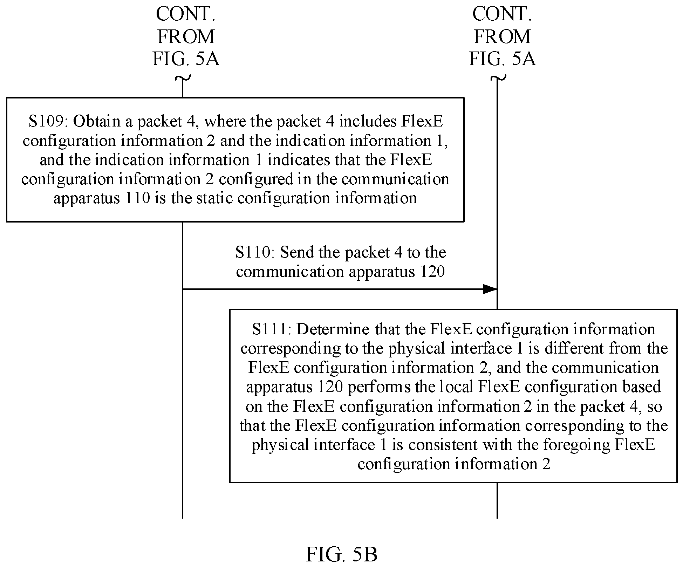

In an implementation of this embodiment of this application, in addition to S101 to S106 or S101 to S108, the method 100 may further include S109 to S111. FIG. 5A and FIG. 5B is a signaling exchange diagram of another FlexE information automatic configuration method according to an embodiment of this application.

S109: The communication apparatus 110 obtains a packet 4, where the packet 4 includes FlexE configuration information 2 and the indication information 1, and the indication information 1 indicates that the FlexE configuration information 2 configured in the communication apparatus 110 is the static configuration information.

S110: The communication apparatus 110 sends the packet 4 to the communication apparatus 120.

S111: The communication apparatus 120 determines that the FlexE configuration information corresponding to the physical interface 1 is different from the FlexE configuration information 2, and the communication apparatus 120 performs the local FlexE configuration based on the FlexE configuration information 2 in the packet 4, so that the FlexE configuration information corresponding to the physical interface 1 is consistent with the foregoing FlexE configuration information 2.

With respect to S109 to S111, it should be noted that in some embodiments, FlexE configuration information configured by the communication apparatus 110 may change. For example, a service carried by the communication apparatus 110 changes. Therefore, the FlexE configuration information configured by the communication apparatus 110 needs to be changed.

In this embodiment of this application, after the FlexE configuration information locally configured on the communication apparatus 110 is changed from the FlexE configuration information 1 to the FlexE configuration information 2, the communication apparatus 110 may generate the packet 4, where the packet 4 includes the FlexE configuration information 2 and the indication information 1, and send the packet 4 to the communication apparatus 120. After the communication apparatus 120 receives the packet 4, the indication information 1 indicates that the FlexE configuration information 2 configured in the communication apparatus 110 is the static configuration information. The FlexE configuration information locally configured on the communication apparatus 120 is obtained in the automatic configuration manner. Therefore, the FlexE configuration information locally configured on the communication apparatus 120 needs to be consistent with the FlexE configuration information locally configured on the communication apparatus 110, so that the communication apparatus 110 and the communication apparatus 120 can communicate with each other by using the FlexE technology. Therefore, after receiving the packet 4, the communication apparatus 120 may compare the FlexE configuration information corresponding to the physical interface 1 with the FlexE configuration information 2. When the FlexE configuration information corresponding to the physical interface 1 and the FlexE configuration information 2 are different, the communication apparatus 120 may perform the local FlexE configuration based on the FlexE configuration information 2 in the packet 4, so that the FlexE configuration information corresponding to the physical interface 1 is consistent with the foregoing FlexE configuration information 2.

For specific implementations of S109 and S110, refer to the foregoing implementation part of S101 and S102. Details are not described herein again.

It can be learned from S109 to S111 that, even if the FlexE configuration information locally configured on the communication apparatus 110 changes, the communication apparatus 120 may automatically change the FlexE configuration information of the physical interface 1, so that the FlexE configuration information corresponding to the physical interface 1 is consistent with the FlexE configuration information 2, thereby ensuring that the communication apparatus 110 and the communication apparatus 120 can communicate with each other by using the FlexE technology.

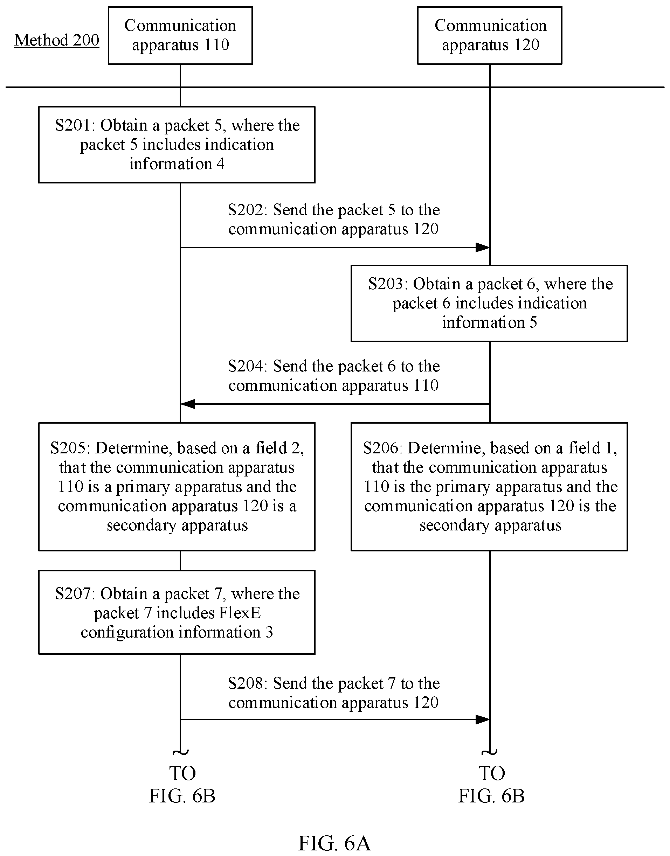

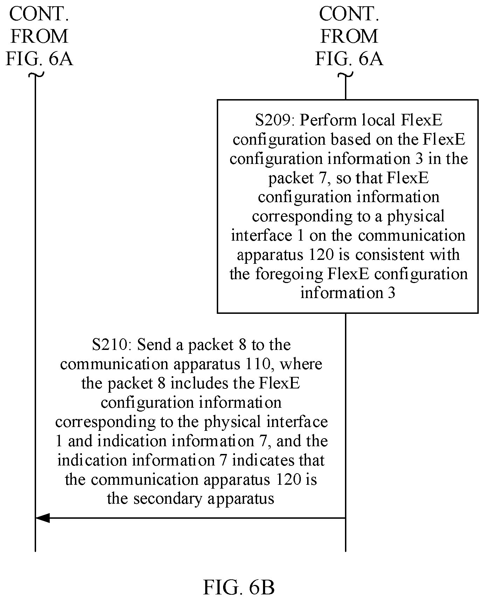

FIG. 6A and FIG. 6B is a signaling exchange diagram of another FlexE information automatic configuration method according to an embodiment of this application.

The method 200 shown in FIG. 6A and FIG. 6B may be, for example, implemented through the following S201 to S209.

S201: The communication apparatus 110 obtains a packet 5, where the packet 5 includes indication information 4.

S202: The communication apparatus 110 sends the packet 5 to the communication apparatus 120.

In this embodiment of this application, the indication information 4 may be carried by using a field of the packet 5. For example, the packet 5 includes a field 1, and the field 1 is used to carry the indication information 4. In this embodiment of this application, the indication information 4 is related information of the communication apparatus 110. The indication information 4 indicates the communication apparatus 120 to determine a primary-secondary relationship between the communication apparatus 110 and the communication apparatus 120. The indication information 4 is not specifically limited in this embodiment of this application. In an example, the indication information 4 may be, for example, an identifier of the communication apparatus 110. The identifier of the communication apparatus 110 mentioned in this embodiment of this application includes but is not limited to an IP address or a MAC address of the communication apparatus 110. In an example, the identifier of the communication apparatus 110 may be an identifier of the interface 2 on the communication apparatus 110. The interface 2 mentioned herein is configured to communicate with the interface 1 on the communication apparatus 120. In another example, the indication information 4 may be a priority of the communication apparatus 110. In an example of this embodiment of this application, when the indication information 4 is the priority of the communication apparatus 110, the field 1 may be, for example, an extended TLV field.

S203: The communication apparatus 120 obtains a packet 6, where the packet 6 includes indication information 5.

S204: The communication apparatus 120 sends the packet 6 to the communication apparatus 110.

In this embodiment of this application, the indication information 5 may be carried by using a field of the packet 6. For example, the packet 6 includes a field 2, and the field 2 is used to carry the indication information 5. In this embodiment of this application, the indication information 5 is related information of the communication apparatus 120. The indication information 5 indicates the communication apparatus 110 to determine the primary-secondary relationship between the communication apparatus 110 and the communication apparatus 120. The indication information 5 is not specifically limited in this embodiment of this application. In an example, the indication information 5 may be, for example, an identifier of the communication apparatus 120. The identifier of the communication apparatus 120 includes but is not limited to an IP address or a MAC address of the communication apparatus 120. In an example, the identifier of the communication apparatus 120 may be an identifier of the interface 1 on the communication apparatus 120. The interface 1 mentioned herein is configured to communicate with the interface 2 on the communication apparatus 110. In another example, the indication information 5 may be used to carry a priority of the communication apparatus 120. In an example of this embodiment of this application, when the field 2 is used to carry the priority of the communication apparatus 120, the field 2 may be, for example, an extended TLV field.

With respect to S201 to S204, it should be noted that a specific execution sequence of the four steps is not limited to that shown in FIG. 5A and FIG. 5B, provided that S202 is performed after S201 and S204 is performed after S203. For example, an execution sequence of the four steps may be: S201-S203-S204-S202.

S205: The communication apparatus 110 determines, based on the indication information 5, that the communication apparatus 110 is a primary apparatus and the communication apparatus 120 is a secondary apparatus.

After receiving the packet 6, the communication apparatus 110 may determine, based on the indication information 5 and information about the communication apparatus 110, that the communication apparatus 110 is the primary apparatus and the communication apparatus 120 is the secondary apparatus.

In an example, when the indication information 5 is the priority of the communication apparatus 120, the communication apparatus 110 may determine, based on the priority of the communication apparatus 110 and the priority of the communication apparatus 120, that the communication apparatus 110 is the primary apparatus and the communication apparatus 120 is the secondary apparatus. For example, if the priority of the communication apparatus 110 is higher than the priority of the communication apparatus 120, the communication apparatus 110 may determine that the communication apparatus 110 is the primary apparatus and the communication apparatus 120 is the secondary apparatus.

In another example, when the indication information 5 is the identifier of the communication apparatus 120, the communication apparatus 110 may determine, based on the identifier of the communication apparatus 110 and the identifier of the communication apparatus 120, that the communication apparatus 110 is the primary apparatus and the communication apparatus 120 is the secondary apparatus. For example, if the identifier of the communication apparatus 120 is less than the identifier of the communication apparatus 110, the communication apparatus 110 may determine that the communication apparatus 110 is the primary apparatus and the communication apparatus 120 is the secondary apparatus.

S206: The communication apparatus 120 determines, based on the indication information 4, that the communication apparatus 110 is the primary apparatus and the communication apparatus 120 is the secondary apparatus.

After receiving the packet 5, the communication apparatus 120 may determine, based on the indication information 4 and information about the communication apparatus 120, that the communication apparatus 110 is the primary apparatus and the communication apparatus 120 is the secondary apparatus.

In an example, when the indication information 4 is the priority of the communication apparatus 110, the communication apparatus 120 may determine, based on the priority of the communication apparatus 110 and the priority of the communication apparatus 120, that the communication apparatus 110 is the primary apparatus and the communication apparatus 120 is the secondary apparatus. For example, if the priority of the communication apparatus 110 is higher than the priority of the communication apparatus 120, the communication apparatus 120 may determine that the communication apparatus 120 is the secondary apparatus and the communication apparatus 110 is the primary apparatus.

In another example, when the indication information 4 is the identifier of the communication apparatus 110, the communication apparatus 120 may determine, based on the identifier of the communication apparatus 110 and the identifier of the communication apparatus 120, that the communication apparatus 110 is the primary apparatus and the communication apparatus 120 is the secondary apparatus. For example, if the identifier of the communication apparatus 120 is less than the identifier of the communication apparatus 110, the communication apparatus 120 may determine that the communication apparatus 120 is the secondary apparatus and the communication apparatus 110 is the primary apparatus.

S207: The communication apparatus 110 obtains a packet 7, where the packet 7 includes FlexE configuration information 3.

The FlexE configuration information 3 is used to perform FlexE configuration on the interface 2 on the communication apparatus 110. In an implementation of this embodiment of this application, the packet 7 may include indication information 6, and the indication information 6 indicates that the communication apparatus 110 is the primary apparatus. In this embodiment of this application, the indication information 6 may be carried by using a field of the packet 7. For example, the indication information 6 may be carried by a field 3. The field 3 indicates a primary/secondary role of a communication apparatus. The field 3 may be an extended TLV field.

The FlexE configuration information 3 may be carried in an extended TLV of the packet 7. For the extended TLV of the packet 7, refer to the foregoing description part of the extended TLV of the packet 1. Details are not described herein again. For the FlexE configuration information 3, refer to the foregoing description part of the FlexE configuration information 1. Details are not described herein again.

In some embodiments, the FlexE configuration information 3 may be statically configured. In some other embodiments, the FlexE configuration information 3 may be automatically generated by the communication apparatus 110. In some other embodiments, some parameters in the FlexE configuration information 3 may be statically configured, and another parameter is automatically generated by the communication apparatus 110. This is not specifically limited in this embodiment of this application. For example, considering that a bandwidth of a FlexE interface is related to a specific service carried by the FlexE interface, to meet a service requirement, the bandwidth of the FlexE interface may be statically configured, and parameters such as a sequence number of the FlexE interface, an identifier of a FlexE group to which the FlexE interface belongs, and an identifier of the FlexE interface may be automatically generated by the communication apparatus 110.

S208: The communication apparatus 110 sends the packet 7 to the communication apparatus 120.

S209: The communication apparatus 120 performs local FlexE configuration based on the FlexE configuration information 3 in the packet 7, so that FlexE configuration information corresponding to the physical interface 1 on the communication apparatus 120 is consistent with the foregoing FlexE configuration information 3.

In this embodiment of this application, the communication apparatus 110 is the primary apparatus, and the communication apparatus 120 is the secondary apparatus. Therefore, FlexE configuration of a secondary apparatus may be automatically configured based on FlexE configuration of a primary apparatus.

After receiving the packet 7, the communication apparatus 120 may perform the local FlexE configuration based on the FlexE configuration information 3 in the packet 7, so that the FlexE configuration information corresponding to the physical interface 1 on the communication apparatus 120 is consistent with the foregoing FlexE configuration information 3. In this way, the physical interface 1 on the communication apparatus 120 may communicate with the physical interface 2 on the communication apparatus 110 by using the FlexE technology.

S210: The communication apparatus 120 sends a packet 8 to the communication apparatus 110, where the packet 8 includes the FlexE configuration information corresponding to the physical interface 1 and indication information 7, and the indication information 7 indicates that the communication apparatus 120 is the secondary apparatus.

After performing the local FlexE configuration based on the packet 7, the communication apparatus 120 may generate the packet 8, where the packet 8 includes the FlexE configuration information corresponding to the physical interface 1 and the indication information 7, and send the packet 5 to the communication apparatus 110.

In this embodiment of this application, the FlexE configuration information corresponding to the physical interface 1 may be carried in an extended TLV of the packet 8. For the extended TLV of the packet 8, refer to the foregoing description part of the extended TLV of the packet 1. Details are not described herein again.

In this embodiment of this application, the indication information 7 indicates that the communication apparatus 120 is the secondary apparatus. The indication information 7 may be carried by using a field of the packet 8. For example, the indication information 7 may be carried by the field 3, and the field 3 indicates a primary/secondary role of a communication apparatus.

It can be learned from the foregoing descriptions that, in this embodiment of this application, the communication apparatus 110 and the communication apparatus 120 may automatically negotiate primary/secondary roles. After the primary/secondary roles of the communication apparatus 110 and the communication apparatus 120 are determined, a secondary apparatus may automatically configure local FlexE configuration information based on FlexE configuration information configured by a primary apparatus, so that FlexE configuration efficiency is improved.

It should be noted that, after S201 to S210 are performed, the communication apparatus 110 may periodically perform S207 and S208. Correspondingly, the communication apparatus 120 may periodically perform S210.

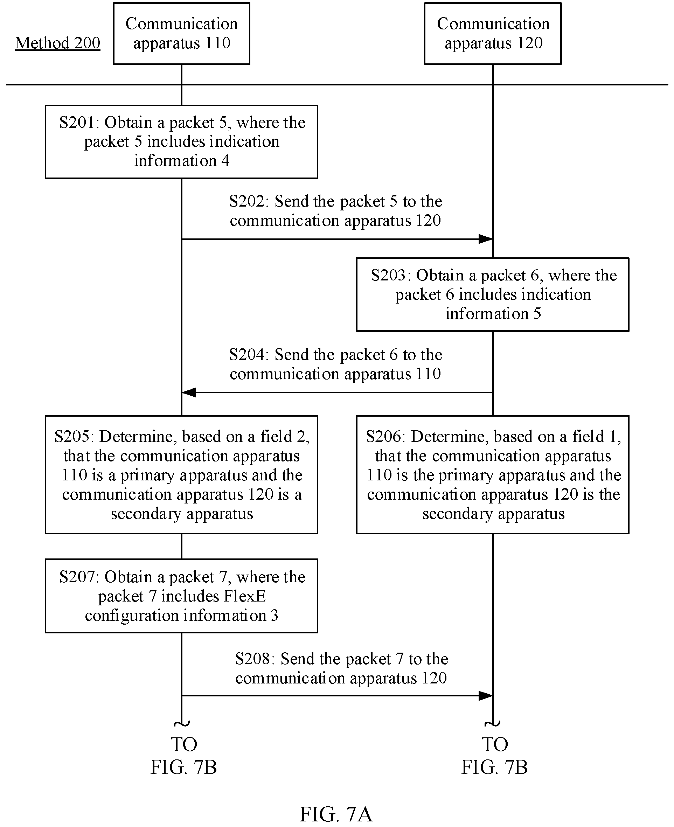

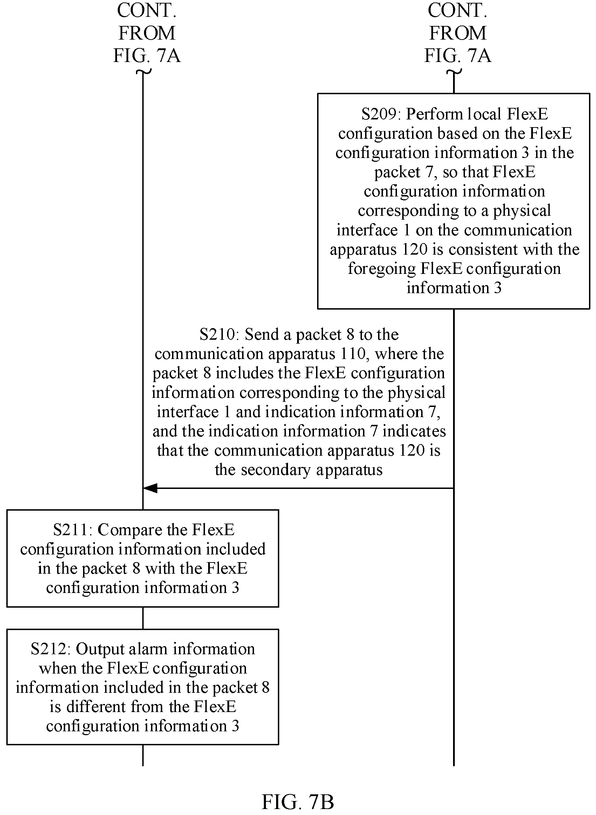

In an implementation of this embodiment of this application, in addition to S201 to S210, the method 200 may further include S211 and S212. FIG. 7A and FIG. 7B is a signaling exchange diagram of another FlexE information automatic configuration method according to an embodiment of this application.

S211: The communication apparatus 110 compares the FlexE configuration information included in the packet 8 with the FlexE configuration information 3.

S212: The communication apparatus 110 outputs alarm information when the FlexE configuration information included in the packet 8 is different from the FlexE configuration information 3.

In this embodiment of this application, in one aspect, after S210 is performed, the FlexE configuration information corresponding to the physical interface 1 of the communication apparatus 120 may be modified, for example, be maliciously tampered with. In another aspect, when the communication apparatus 120 performs the local FlexE configuration based on the packet 7, an abnormal configuration may occur, for example, a specific parameter is incorrectly configured. In this case, the FlexE configuration information 3 locally configured on the communication apparatus 110 may be inconsistent with FlexE configuration information locally configured on the communication apparatus 120. As a result, the communication apparatus 110 and the communication apparatus 120 cannot communicate with each other by using the FlexE technology. To reduce a negative impact caused by this case, in this embodiment of this application, after receiving the packet 8, the communication apparatus 110 may compare the FlexE configuration information included in the packet 8 with the FlexE configuration information 3. If the FlexE configuration information included in the packet 8 and the FlexE configuration information 3 are different, the communication apparatus 110 may output the alarm information to remind maintenance personnel to perform timely processing, to avoid that the communication apparatus 110 and the communication apparatus 120 cannot communicate with each other by using the FlexE technology for a long time.

In this embodiment of this application, the communication apparatus 110 may output the alarm information in a plurality of implementations. In an example, the communication apparatus 110 may send the alarm information to the control management device. In another example, the communication apparatus 110 may control a speaker to play alarm audio, and the like. This is not specifically limited in this embodiment of this application.

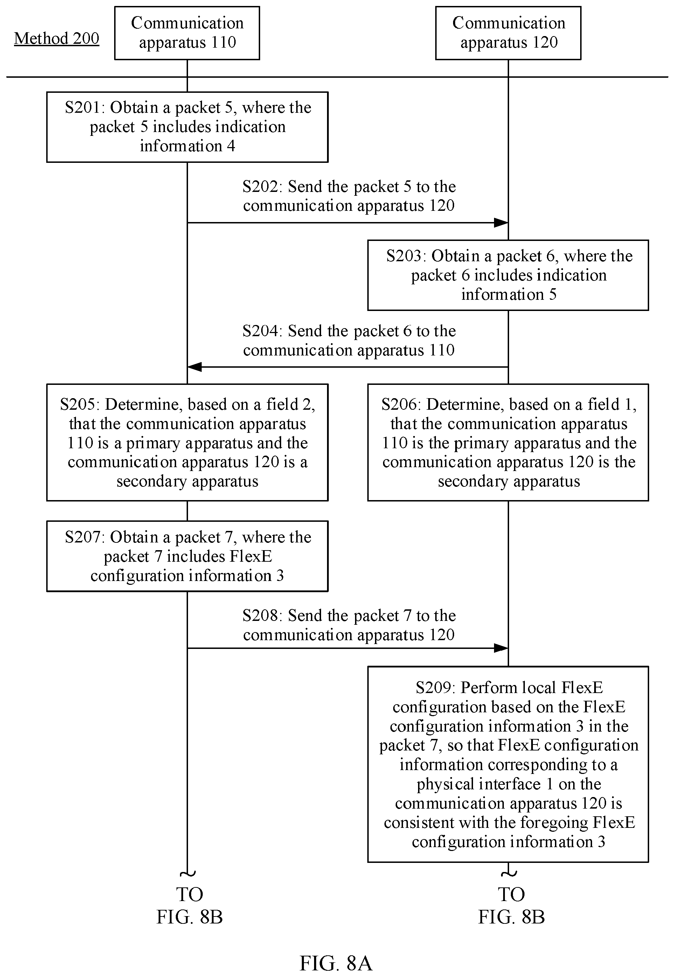

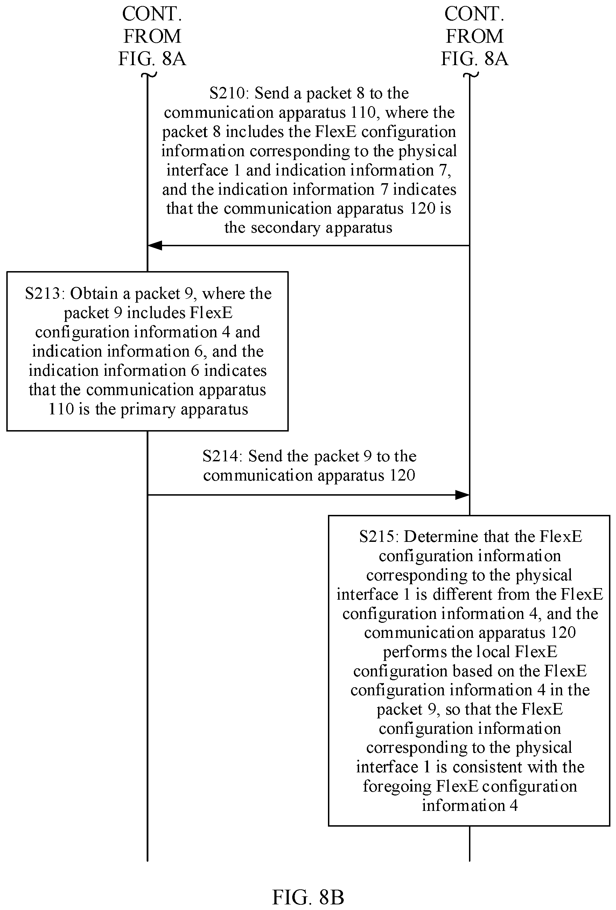

In an implementation of this embodiment of this application, in addition to S201 to S210 or S201 to S212, the method 200 may further include S213 to S215. FIG. 8A and FIG. 8B is a signaling exchange diagram of another FlexE information automatic configuration method according to an embodiment of this application.

S213: The communication apparatus 110 obtains a packet 9, where the packet 9 includes FlexE configuration information 4 and the indication information 6, and the indication information 6 indicates that the communication apparatus 110 is the primary apparatus.

S214: The communication apparatus 110 sends the packet 9 to the communication apparatus 120.

S215: The communication apparatus 120 determines that the FlexE configuration information corresponding to the physical interface 1 is different from the FlexE configuration information 4, and the communication apparatus 120 performs the local FlexE configuration based on the FlexE configuration information 4 in the packet 9, so that the FlexE configuration information corresponding to the physical interface 1 is consistent with the foregoing FlexE configuration information 4.

With respect to S213 to S215, it should be noted that in some embodiments, FlexE configuration information configured by the communication apparatus 110 may change, for example, a service carried by the communication apparatus 110 changes. Therefore, the FlexE configuration information configured by the communication apparatus 110 needs to be changed.

In this embodiment of this application, after the FlexE configuration information locally configured on the communication apparatus 110 is changed from the FlexE configuration information 3 to the FlexE configuration information 4, the communication apparatus 110 generates a packet 9, where the packet 9 includes the FlexE configuration information 4 and the indication information 6, and sends the packet 9 to the communication apparatus 120. The communication apparatus 120 is the secondary apparatus, and the communication apparatus 110 is the primary apparatus. Therefore, the FlexE configuration information locally configured on the communication apparatus 120 needs to be consistent with the FlexE configuration information locally configured on the communication apparatus 110, so that the communication apparatus 110 and the communication apparatus 120 can communicate with each other by using the FlexE technology. Therefore, after receiving the packet 9, the communication apparatus 120 may compare the FlexE configuration information corresponding to the physical interface 1 with the FlexE configuration information 4. When the FlexE configuration information corresponding to the physical interface 1 and the FlexE configuration information 4 are different, the communication apparatus 120 may perform the local FlexE configuration based on the FlexE configuration information 4 in the packet 9, so that the FlexE configuration information corresponding to the physical interface 1 is consistent with the foregoing FlexE configuration information 4.

For specific implementations of S213 and S214, refer to the foregoing implementation part of S101 and S102. Details are not described herein again.

It can be learned from S213 to S215 that, even if the FlexE configuration information locally configured on the communication apparatus 110 changes, the communication apparatus 120 may automatically change the FlexE configuration information of the physical interface 1, so that the FlexE configuration information corresponding to the physical interface 1 is consistent with the FlexE configuration information 2, thereby ensuring that the communication apparatus 110 and the communication apparatus 120 can communicate with each other by using the FlexE technology.

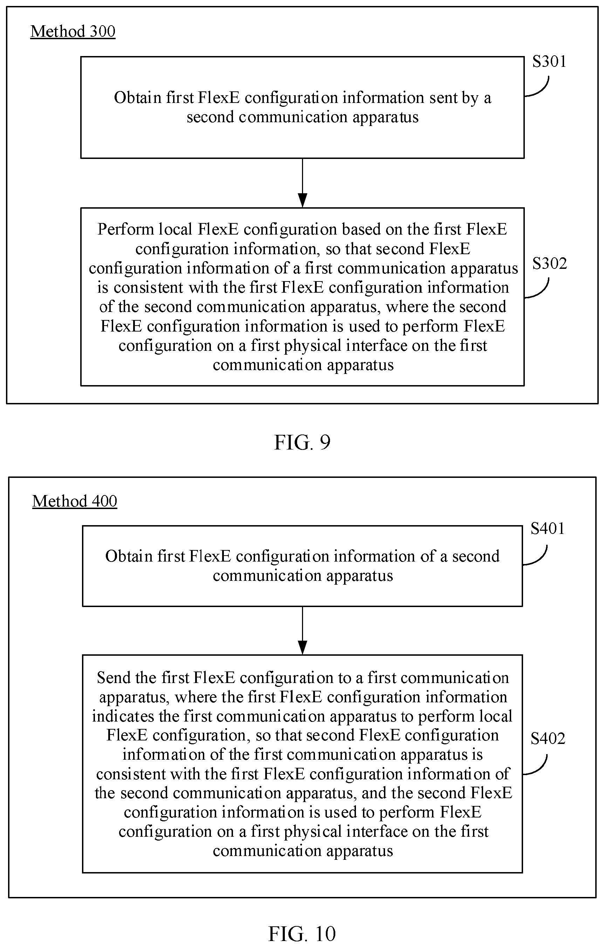

An embodiment of this application further provides a FlexE information automatic configuration method 300. FIG. 9 is a schematic flowchart of a FlexE information automatic configuration method according to an embodiment of this application.

The method 300 shown in FIG. 9 may be performed by a first communication apparatus, and the first communication apparatus may be, for example, the communication apparatus 120 mentioned in the foregoing embodiments. The method 300 shown in FIG. 9 may be applied to the method 100 or the method 200 mentioned in the foregoing embodiments. In the method 300, steps performed by the communication apparatus 120 in the foregoing method 100 or method 200 are performed. For example, the method 300 may include the following steps S301 and S302.

S301: Obtain first FlexE configuration information sent by a second communication apparatus.

S302: Perform local FlexE configuration based on the first FlexE configuration information, so that second FlexE configuration information of the first communication apparatus is consistent with the first FlexE configuration information of the second communication apparatus. The second FlexE configuration information is used to perform FlexE configuration on a first physical interface on the first communication apparatus.

After performing the local FlexE configuration based on the first FlexE configuration information, the first communication apparatus may establish FlexE communication with the second communication apparatus based on the second FlexE configuration information obtained through the configuration.

In an implementation, when the method 300 is applied to the method 100 mentioned in the foregoing embodiments, the first FlexE configuration information may be the FlexE configuration information 1 mentioned above, and the FlexE configuration information 1 may be carried in the packet 1 in the method 100.

In another implementation, when the method 300 is applied to the method 100 mentioned in the foregoing embodiments, the first FlexE configuration information may be the FlexE configuration information 2 mentioned above, and the FlexE configuration information 2 may be carried in the packet 4 in the method 100.

In an implementation, when the method 300 is applied to the method 200 mentioned in the foregoing embodiments, the first FlexE configuration information may be the FlexE configuration information 3 mentioned above, and the FlexE configuration information 3 may be carried in the packet 7 in the method 200.

In another implementation, when the method 300 is applied to the method 200 mentioned in the foregoing embodiments, the first FlexE configuration information may be the FlexE configuration information 4 mentioned above, and the FlexE configuration information 4 may be carried in the packet 9 in the method 200.

In an example, the second communication apparatus may be, for example, the communication apparatus 110 mentioned in the foregoing embodiments, and the first physical interface may be the physical interface 121 of the communication apparatus 120.

In an implementation, before the first communication apparatus performs the local FlexE configuration, the first communication apparatus is configured with no FlexE information.

In an implementation, performing the local FlexE configuration based on the first FlexE configuration information includes the following step.

Update third FlexE configuration information by using the first FlexE configuration information. For this case, in an example, the first FlexE configuration information may be the FlexE configuration information 2 mentioned above, and the third FlexE configuration information may be, for example, configuration information obtained after the local FlexE configuration is performed based on the packet 1, that is, the FlexE configuration information 1. In another example, the first FlexE configuration information may be the FlexE configuration information 4 mentioned above, and the third FlexE configuration information may be, for example, configuration information obtained after the local FlexE configuration is performed based on the packet 7, that is, the FlexE configuration information 3.

In an implementation, the first FlexE configuration information is static configuration information. The second communication apparatus may send corresponding indication information to the first communication apparatus, for example, corresponding indication information 1 in the method 100, to notify the first communication apparatus that the first FlexE configuration information is the static configuration information.

In an implementation, when the method 300 is applied to the foregoing method 100, before the first communication apparatus performs the local FlexE configuration, the method further includes the following step.

Send first indication information to the second communication apparatus, where the first indication information indicates that the first communication apparatus is configured with no FlexE information.

In this case, the first indication information may correspond to the indication information 2 in the method 100.

In an implementation, the method further includes the following step.

Send the second FlexE configuration information to the second communication apparatus.

In an implementation, the second FlexE configuration information mentioned herein may be carried in the packet 3 in the method 100. The second FlexE configuration information may be the configuration information obtained by the first communication apparatus by performing the local FlexE configuration based on the packet 1.

In another implementation, the second FlexE configuration information mentioned herein may be carried in the packet 8 in the method 200. The second FlexE configuration information may be the configuration information obtained by the first communication apparatus by performing the local FlexE configuration based on the packet 7.

In an implementation, the method further includes the following step.

Send fourth indication information to the second communication apparatus, where the fourth indication information indicates that the second FlexE configuration information is obtained through automatic configuration. The fourth indication information mentioned herein may be carried in the packet 3 in the method 100, and corresponds to the indication information 3 in the method 100. In another example, the fourth indication information mentioned herein may alternatively be carried in the packet 8 in the method 200.

In an implementation, the method further includes the following step.

Send fifth indication information to the second communication apparatus, where the fifth indication information indicates that the first communication apparatus is a secondary apparatus. The fifth indication information mentioned herein may correspond to the indication information 7 in the method 200. For example, the indication information 7 may be sent to the second communication apparatus in a manner of being carried in the packet 8 in the method 200.

In an implementation, the first communication apparatus is the secondary apparatus, and the second communication apparatus is a primary apparatus.

In an implementation, when the method 300 is applied to the method 200, the method further includes the following steps.

Receive second indication information sent by the second communication apparatus.

Determine, based on the second indication information, that a role of the first communication apparatus is the secondary apparatus and/or that a role of the second communication apparatus is the primary apparatus.

The second indication information may correspond to the indication information 4 in the method 200.

In an implementation, the second indication information includes first priority indication information, and the first priority indication information indicates a first priority of the second communication apparatus.

In an implementation, the second indication information includes an identifier of the second communication apparatus.

In an implementation, the identifier of the second communication apparatus includes a media access control MAC address of the second communication apparatus, or an internet protocol IP address of the second communication apparatus.

In an implementation, when the method 300 is applied to the method 200, the method further includes the following step.

Send third indication information to the second communication apparatus. The third indication information indicates the second communication apparatus to determine the role of the second communication apparatus as the primary apparatus and/or determine the role of the first communication apparatus as the secondary apparatus.

The third indication information mentioned herein may correspond to the indication information 5 in the method 200.

In an implementation, the third indication information includes second priority indication information, and the second priority indication information indicates a second priority of the first communication apparatus.

In an implementation, the third indication information includes an identifier of the first communication apparatus.

In an implementation, the identifier of the first communication apparatus includes a MAC address of the first communication apparatus or an IP address of the second communication apparatus.

In an implementation, the first FlexE configuration information includes any one or more of the following:
an identifier of a FlexE group to which a physical interface belongs, a physical layer PHY number of the physical interface, a bandwidth configuration mode of a FlexE interface, a slot granularity, a sequence number of the FlexE interface, an identifier of a FlexE group to which the FlexE interface belongs, a bandwidth of the FlexE interface, a physical interface bound to the FlexE interface, a slot bound to the FlexE interface, and an identifier of the FlexE interface.

In an implementation, before the first FlexE configuration information is obtained, the method further includes the following step.

Receive a first packet sent by the second communication apparatus. The first packet carries the first FlexE configuration information.

In an implementation, before the first FlexE configuration information is obtained, the method further includes the following step.

Receive a first packet sent by a control management device. The first packet carries the first FlexE configuration information.

In an implementation, the first FlexE configuration information is carried in an extended type-length-value TLV of the first packet.

In an implementation, the first FlexE configuration information includes the slot granularity, the extended TLV includes a first sub-TLV, and the first sub-TLV is used to carry the slot granularity.

In an implementation, the first FlexE configuration information includes FlexE interface information, the extended TLV includes a second sub-TLV, and the second sub-TLV is used to carry the FlexE interface information.

In an implementation, the FlexE interface information includes any one or more of the following:
the sequence number of the FlexE interface, the identifier of the FlexE group to which the FlexE interface belongs, the bandwidth of the FlexE interface, the physical interface bound to the FlexE interface, the slot bound to the FlexE interface, and the identifier of the FlexE interface.

In an implementation, the first packet is a link layer discovery protocol LLDP packet, a FlexE overhead frame, or an ethernet in the first mile EFM packet.

In an implementation, the first packet includes sixth indication information, and the sixth indication information indicates that the first FlexE configuration information is the static configuration information.

When the first packet corresponds to the packet 1 in the method 100 and the packet 4 in the method 100, the sixth indication information may correspond to the indication information 1 in the method 100.

In an implementation, the sixth indication information is carried in the extended TLV field of the first packet.

In an implementation, the first packet includes seventh indication information, and the seventh indication information indicates that the second communication apparatus is the primary apparatus.

When the first packet corresponds to the packet 7 in the method 200 and the packet 9 in the method 200, the sixth indication information may correspond to the indication information 6 in the method 200.

In an implementation, the seventh indication information is carried in the extended TLV field of the first packet.

For a specific implementation of the method 300, refer to the foregoing related description parts of the method 100 and the method 200. Details are not described herein again.

An embodiment of this application further provides a FlexE information automatic configuration method 400. FIG. 10 is a schematic flowchart of a FlexE information automatic configuration method according to an embodiment of this application.

The method 400 shown in FIG. 10 may be performed by a second communication apparatus, and the second communication apparatus may be, for example, the communication apparatus 110 mentioned in the foregoing embodiments. The method 400 shown in FIG. 10 may be applied to the method 100 or the method 200 mentioned in the foregoing embodiments. In the method 400, steps performed by the communication apparatus 110 in the foregoing method 100 or the method 200 are performed. For example, the method 400 may include the following steps S401 and S402.

S401: Obtain first FlexE configuration information of the second communication apparatus.

S402: Send the first FlexE configuration to a first communication apparatus, where the first FlexE configuration information indicates the first communication apparatus to perform local FlexE configuration, so that second FlexE configuration information of the first communication apparatus is consistent with the first FlexE configuration information of the second communication apparatus, and the second FlexE configuration information is used to perform FlexE configuration on a first physical interface on the first communication apparatus.

In an implementation, when the method 400 is applied to the method 100 mentioned in the foregoing embodiments, the first FlexE configuration information may be the FlexE configuration information 1 mentioned above.

In another implementation, when the method 400 is applied to the method 100 mentioned in the foregoing embodiments, the first FlexE configuration information may be the FlexE configuration information 2 mentioned above.

In an implementation, when the method 400 is applied to the method 200 mentioned in the foregoing embodiments, the first FlexE configuration information may be the FlexE configuration information 3 mentioned above.

In another implementation, when the method 400 is applied to the method 200 mentioned in the foregoing embodiments, the first FlexE configuration information may be the FlexE configuration information 4 mentioned above.

In an example, the first communication apparatus may be, for example, the communication apparatus 120 mentioned in the foregoing embodiments, and the first physical interface may be the physical interface 121 of the communication apparatus 120.

In an implementation, the first FlexE configuration information is static configuration information.

In an implementation, the method further includes the following step.

Receive first indication information from the first communication apparatus, where the first indication information indicates that the first communication apparatus is configured with no FlexE information. The first indication information mentioned herein may correspond to the indication information 2 in the method 100. In an implementation, the first communication apparatus is a secondary apparatus, and the second communication apparatus is a primary apparatus.

In an implementation, when the method 400 is applied to the method 200, the method further includes the following step.

Send second indication information to the first communication apparatus, where the second indication information indicates the first communication apparatus to determine that a role of the first communication apparatus is the secondary apparatus and/or determine that a role of the second communication apparatus is the primary apparatus.

The second indication information mentioned herein may correspond to the indication information 4 in the method 200.

In an implementation, the second indication information includes first priority indication information, and the first priority indication information indicates a first priority of the second communication apparatus.

In an implementation, the second indication information includes an identifier of the second communication apparatus.

In an implementation, the identifier of the second communication apparatus includes:
a media access control MAC address of the second communication apparatus, or an internet protocol IP address of the second communication apparatus.

In an implementation, when the method 300 is applied to the method 200, the method further includes the following steps.

Receive third indication information from the first communication apparatus.

Determine, based on the third indication information, the role of the second communication apparatus as the primary apparatus and/or the role of the first communication apparatus as the secondary apparatus.

The third indication information mentioned herein may correspond to the indication information 5 in the method 200.

In an implementation, the third indication information includes second priority indication information, and the second priority indication information indicates a second priority of the first communication apparatus.

In an implementation, the third indication information includes an identifier of the first communication apparatus.

In an implementation, the identifier of the first communication apparatus includes:
a MAC address of the first communication apparatus or an IP address of the first communication apparatus.

In an implementation, the first FlexE configuration information includes the static configuration information and/or configuration information generated by the second communication apparatus.

In an implementation, a first FlexE parameter includes any one or more of the following:
an identifier of a FlexE group to which a physical interface belongs, a physical layer PHY number of the physical interface, a bandwidth configuration mode of a FlexE logical interface, a slot granularity, a sequence number of the FlexE interface, an identifier of a FlexE group to which the FlexE logical interface belongs, a bandwidth of the FlexE logical interface, a physical interface bound to the FlexE logical interface, a slot bound to the FlexE logical interface, and an identifier of the FlexE logical interface.

In an implementation, sending the first FlexE configuration information to the first communication apparatus includes the following step.

Send, to the first communication apparatus, a first packet that carries the first FlexE configuration information.

In an implementation, when the first FlexE configuration information may be the FlexE configuration information 1 mentioned above, the first packet is the packet 1 in the method 100.

In another implementation, when the first FlexE configuration information may be the FlexE configuration information 2 mentioned above, the first packet is the packet 4 in the method 100.

In an implementation, when the first FlexE configuration information may be the FlexE configuration information 3 mentioned above, the first packet is the packet 7 in the method 200.

In another implementation, when the first FlexE configuration information may be the FlexE configuration information 4 mentioned above, the first packet is the packet 9 in the method 200.

In an implementation, the first FlexE configuration information is carried in an extended type-length-value TLV of the first packet.

In an implementation, the first FlexE configuration information includes the slot granularity, the extended TLV includes a first sub-TLV, and the first sub-TLV is used to carry the slot granularity.

In an implementation, the first FlexE configuration information includes FlexE interface information, the extended TLV includes a second sub-TLV, and the second sub-TLV is used to carry the FlexE interface information.

In an implementation, the FlexE interface information includes any one or more of the following:
the sequence number of the FlexE interface, the identifier of the FlexE group to which the FlexE interface belongs, the bandwidth of the FlexE interface, the physical interface bound to the FlexE interface, the slot bound to the FlexE interface, and the identifier of the FlexE interface.

In an implementation, the first packet is a link layer discovery protocol LLDP packet, a FlexE overhead frame, or an ethernet in the first mile EFM packet.

In an implementation, the method further includes: receiving fourth indication information from the first communication apparatus, where the fourth indication information indicates that the second FlexE configuration information is obtained through automatic configuration.

The fourth indication information mentioned herein may be carried in the packet 3 in the method 100, and corresponds to the indication information 3 in the method 100. In another example, the fourth indication information mentioned herein may alternatively be carried in the packet 8 in the method 200.

In an implementation, the method further includes the following step.

Receive fifth indication information from the first communication apparatus, where the fifth indication information indicates that the first communication apparatus is the secondary apparatus.

The fifth indication information mentioned herein may correspond to the indication information 7 in the method 200. For example, the indication information 7 may be sent to the second communication apparatus in a manner of being carried in the packet 8 in the method 200.

In an implementation, the method further includes the following step.

Output alarm information when it is determined that the received second FlexE configuration information is different from the first FlexE configuration information.

If the second FlexE configuration information is carried in the packet 3 in the method 100, the first FlexE configuration information corresponds to the FlexE configuration information 1 in the method 100. If the second FlexE configuration information is carried in the packet 8 in the method 200, the first FlexE configuration information corresponds to the FlexE configuration information 3 in the method 100.

In an implementation, the first packet includes sixth indication information, and the sixth indication information indicates that the first FlexE configuration information is the static configuration information.

When the first packet corresponds to the packet 1 in the method 100 and the packet 4 in the method 100, the sixth indication information may correspond to the indication information 1 in the method 100.

In an implementation, the sixth indication information is carried in the extended TLV field of the first packet.

In an implementation, the first packet includes seventh indication information, and the seventh indication information indicates that the second communication apparatus is the primary apparatus.

When the first packet corresponds to the packet 7 in the method 200 and the packet 9 in the method 200, the sixth indication information may correspond to the indication information 6 in the method 200.

In an implementation, the seventh indication information is carried in the extended TLV field of the first packet.

For a specific implementation of the method 400, refer to the foregoing related description parts of the method 100 and the method 200. Details are not described herein again.

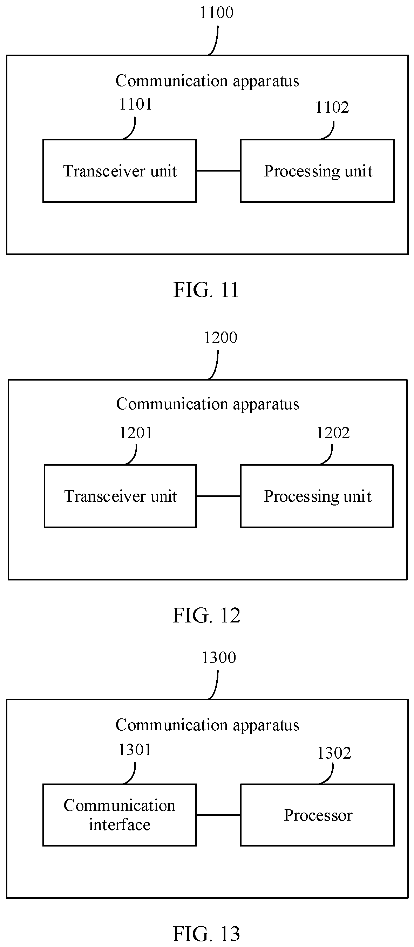

In addition, an embodiment of this application further provides a communication apparatus 1100 as shown in FIG. 11. The communication apparatus 1100 is used as a first communication apparatus. FIG. 11 is a schematic diagram of a structure of a communication apparatus according to an embodiment of this application. The communication apparatus 1100 includes a transceiver unit 1101 and a processing unit 1102. The transceiver unit 1101 is configured to perform receiving and sending operations performed by the first communication apparatus in the foregoing embodiments. The processing unit 1102 is configured to perform an operation other than the receiving and sending operations performed by the first communication apparatus mentioned in the foregoing embodiments. For example, the transceiver unit 1101 is configured to receive first FlexE configuration information sent by a second communication apparatus, and the processing unit 1102 is configured to perform local FlexE configuration based on the first FlexE configuration information, so that second FlexE configuration information of the first communication apparatus is consistent with the first FlexE configuration information of the second communication apparatus.

In addition, an embodiment of this application further provides a communication apparatus 1200 as shown in FIG. 12. The communication apparatus 1200 is used as a second communication apparatus. FIG. 12 is a schematic diagram of a structure of a communication apparatus according to an embodiment of this application. The communication apparatus 1200 includes a transceiver unit 1201 and a processing unit 1202. The transceiver unit 1201 is configured to perform receiving and sending operations performed by the second communication apparatus in the foregoing embodiments. The processing unit 1202 is configured to perform an operation other than the receiving and sending operations performed by the second communication apparatus mentioned in the foregoing embodiments. For example, the processing unit 1202 is configured to obtain first FlexE configuration information, and the transceiver unit 1201 is configured to send the first FlexE configuration information to a first communication apparatus.

In addition, an embodiment of this application further provides a communication apparatus 1300 that is used as a first communication apparatus. FIG. 13 is a schematic diagram of a structure of a communication apparatus according to an embodiment of this application. The communication apparatus 1300 includes a communication interface 1301 and a processor 1302 connected to the communication interface 1301. The communication interface 1301 is configured to perform receiving and sending operations performed by the first communication apparatus in the foregoing embodiments. The processor 1302 is configured to perform an operation other than the receiving and sending operations performed by the first communication apparatus in the foregoing embodiments. For example, the communication interface 1301 is configured to receive first FlexE configuration information sent by a second communication apparatus, and the processor 1302 is configured to perform local FlexE configuration based on the first FlexE configuration information, so that second FlexE configuration information of the first communication apparatus is consistent with the first FlexE configuration information of the second communication apparatus. In this way, FlexE communication can be established with the second communication apparatus based on the second FlexE configuration information.

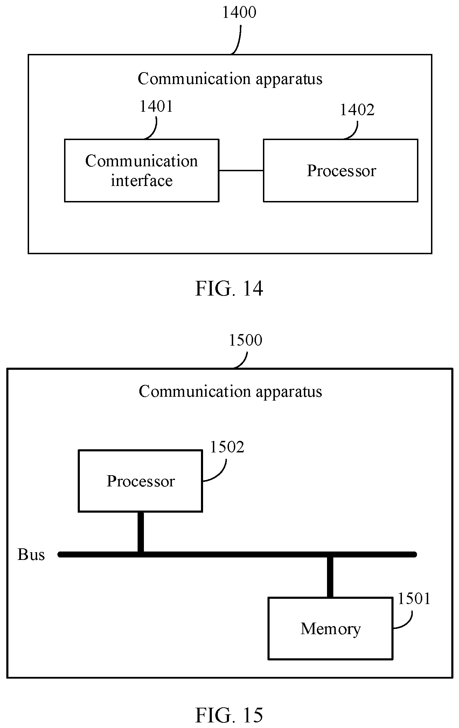

In addition, an embodiment of this application further provides a communication apparatus 1400 that is used as a second communication apparatus. FIG. 14 is a schematic diagram of a structure of a communication apparatus according to an embodiment of this application. The communication apparatus 1400 includes a communication interface 1401 and a processor 1402 connected to the communication interface 1401. The communication interface 1401 is configured to perform receiving and sending operations performed by the second communication apparatus in the foregoing embodiments. The processor 1402 is configured to perform an operation other than the receiving and sending operations performed by the second communication apparatus in the foregoing embodiments. For example, the processor 1402 is configured to obtain first FlexE configuration information, and the communication interface 1401 is configured to send the first FlexE configuration information to a first communication apparatus.

In addition, an embodiment of this application further provides a communication apparatus 1500 that is used as a first communication apparatus. FIG. 15 is a schematic diagram of a structure of a communication apparatus according to an embodiment of this application. The communication apparatus 1500 includes a memory 1501 and a processor 1502. The memory 1501 is configured to store program code, and the processor 1502 is configured to run instructions in the program code, so that the first communication apparatus performs the steps performed by the first communication apparatus in the foregoing embodiments.

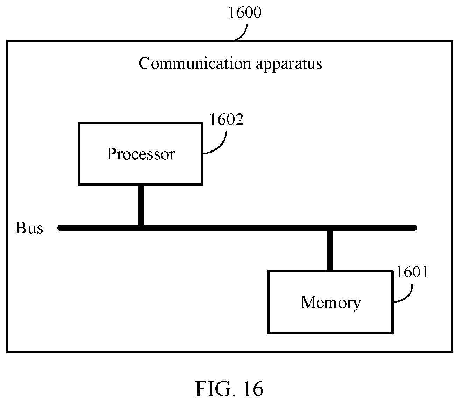

In addition, an embodiment of this application further provides a communication apparatus 1600 that is used as a second communication apparatus. FIG. 16 is a schematic diagram of a structure of a communication apparatus according to an embodiment of this application. The communication apparatus 1600 includes a memory 1601 and a processor 1602. The memory 1601 is configured to store program code, and the processor 1602 is configured to run instructions in the program code, so that the second communication apparatus performs the steps performed by the second communication apparatus in the foregoing embodiments.

In the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way are interchangeable in appropriate circumstances so that embodiments described herein can be implemented in other orders than the order illustrated or described herein. In addition, the terms "include" and "have" and any other variants are intended to cover non-exclusive inclusions. For example, a process, method, system, product, or device that includes a list of steps or units is not necessarily limited to those expressly listed steps or units, but may include other steps or units not expressly listed or inherent to such a process, method, product, or device.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiments are merely examples. For example, division into units is merely logical service division and may be another division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, in other words, may be located in one position, or may be distributed on a plurality of network units. A part or all of the units may be selected based on actual requirements to achieve the objectives of the solutions of embodiments.

In addition, service units in embodiments of this application may be integrated into one processing unit, or each of the units may exist alone physically, or two or more units may be integrated into one unit. The integrated unit may be implemented in a form of hardware, or may be implemented in a form of a software service unit.

When the integrated unit is implemented in a form of a software service unit and sold or used as an independent product, the integrated unit may be stored in a computer-readable storage medium. Based on such an understanding, technical solutions of this application essentially, or a part contributing to a conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the method in embodiments of this application. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc.

A person skilled in the art should be aware that, in the foregoing one or more examples, services described in the present invention may be implemented by hardware, software, firmware, or any combination thereof. When the present invention is implemented by the software, the services may be stored in a computer-readable medium or transmitted as one or more instructions or code in the computer-readable medium. The computer-readable medium includes a computer storage medium and a communication medium, where the communication medium includes any medium that enables a computer program to be transmitted from one place to another. The storage medium may be any available medium accessible by a general-purpose or a dedicated computer.

## Claims

1. A flexible ethernet, FlexE, automatic configuration method, implemented by a first communication apparatus (120), wherein the method comprises:
obtaining first FlexE configuration information sent by a second communication apparatus (110);
performing local FlexE configuration based on the first FlexE configuration information, so that second FlexE configuration information of the first communication apparatus (120) is consistent with the first FlexE configuration information of the second communication apparatus (110), wherein the second FlexE configuration information is considered to be consistent with the first FlexE configuration information when the first FlexE configuration information and the second FlexE configuration information are the same, and wherein the second FlexE configuration information is used to perform FlexE configuration on a first physical interface on the first communication apparatus (120); and
establishing FlexE communication with the second communication apparatus (110) based on the second FlexE configuration information,
wherein the first communication apparatus (120) is a secondary apparatus, and the second communication apparatus (110) is a primary apparatus, and
wherein before obtaining the first FlexE configuration information, the method further comprises:
receiving second indication information from the second communication apparatus (110), wherein the second indication information comprises first priority indication information, and the first priority indication information indicates a first priority of the second communication apparatus (110), wherein the second indication information comprises an identifier of the second communication apparatus (110);
determining, based on the second indication information, that a role of the first communication apparatus (120) is the secondary apparatus and/or that a role of the second communication apparatus (110) is the primary apparatus; and
sending third indication information, wherein the third indication information indicates the second communication apparatus (110) to determine the role of the second communication apparatus (110) as the primary apparatus and/or determine the role of the first communication apparatus (120) as the secondary apparatus, wherein the third indication information comprises second priority indication information, and the second priority indication information indicates a second priority of the first communication apparatus (120).

2. The method according to claim 1, wherein prior to the local FlexE configuration, the first communication apparatus (120) is configured with no FlexE information.

3. The method according to claim 1, wherein before the obtaining the first FlexE configuration information, FlexE configuration information locally configured on the first communication apparatus (120) is third FlexE configuration information, and the performing local FlexE configuration based on the first FlexE configuration information comprises:
updating the third FlexE configuration information by using the first FlexE configuration information.

4. The method according to any one of claims 1 to 3, wherein the first FlexE configuration information is static configuration information.

5. The method according to any one of claims 1 to 4, wherein prior to the local FlexE configuration, the method further comprises:
sending first indication information to the second communication apparatus (110), wherein the first indication information indicates that the first communication apparatus (120) is configured with no FlexE information.

6. The method according to claim 1, wherein the identifier of the second communication apparatus (110) comprises:
a media access control MAC address of the second communication apparatus (110), or an internet protocol IP address of the second communication apparatus (110).

7. The method according to claim 1, wherein the third indication information comprises an identifier of the first communication apparatus (120).

8. A first communication apparatus (120), wherein the first communication apparatus (120) comprises a memory and a processor;
the memory is configured to store program code; and
the processor is configured to run instructions in the program code, to enable the first communication apparatus (120) to perform the method according to any one of claims 1 to 7.

9. A computer program comprising instructions which, when the program is executed by a computer, cause the computer to carry out all the steps of the method according to any one of claims 1 to 7.

## Patentansprüche

1. Automatisches Konfigurationsverfahren für flexibles Ethernet, FlexE, das durch eine erste Kommunikationsvorrichtung (120) implementiert wird, wobei das Verfahren Folgendes umfasst:
Erlangen von ersten FlexE-Konfigurationsinformationen, die durch eine zweite Kommunikationsvorrichtung (110) gesendet werden;
Durchführen einer lokalen FlexE-Konfiguration basierend auf den ersten FlexE-Konfigurationsinformationen, so dass die zweiten FlexE-Konfigurationsinformationen der ersten Kommunikationsvorrichtung (120) mit den ersten FlexE-Konfigurationsinformationen der zweiten Kommunikationsvorrichtung (110) konsistent ist, wobei die zweiten FlexE-Konfigurationsinformationen als konsistent mit den ersten FlexE-Konfigurationsinformationen erachtet werden, wenn die ersten FlexE-Konfigurationsinformationen und die zweiten FlexE-Konfigurationsinformationen dieselben sind, und wobei die zweiten FlexE-Konfigurationsinformationen verwendet werden, um eine FlexE-Konfiguration auf einer ersten physischen Schnittstelle auf der ersten Kommunikationsvorrichtung (120) durchzuführen; und
Herstellen einer FlexE-Kommunikation mit der zweiten Kommunikationsvorrichtung (110) basierend auf den zweiten FlexE-Konfigurationsinformationen,
wobei die erste Kommunikationsvorrichtung (120) eine sekundäre Vorrichtung ist und die zweite Kommunikationsvorrichtung (110) eine primäre Vorrichtung ist, und
wobei das Verfahren vor dem Erlangen der ersten FlexE-Konfigurationsinformationen ferner Folgendes umfasst:
Empfangen zweiter Anzeigeinformationen aus der zweiten Kommunikationsvorrichtung (110), wobei die zweiten Anzeigeinformationen erste Prioritätsanzeigeinformationen umfassen, und die ersten Prioritätsanzeigeinformationen eine erste Priorität der zweiten Kommunikationsvorrichtung (110) anzeigen, wobei die zweiten Anzeigeinformationen eine Kennung der zweiten Kommunikationsvorrichtung (110) umfassen;
Bestimmen, basierend auf den zweiten Anzeigeinformationen, dass eine Rolle der ersten Kommunikationsvorrichtung (120) die sekundäre Vorrichtung ist und/oder dass eine Rolle der zweiten Kommunikationsvorrichtung (110) die primäre Vorrichtung ist; und
Senden dritter Anzeigeinformationen, wobei die dritten Anzeigeinformationen die zweite Kommunikationsvorrichtung (110) anweisen, die Rolle der zweiten Kommunikationsvorrichtung (110) als primäre Vorrichtung zu bestimmen und/oder die Rolle der ersten Kommunikationsvorrichtung (120) als sekundäre Vorrichtung zu bestimmen, wobei die dritten Anzeigeinformationen zweite Prioritätsanzeigeinformationen umfassen, und die zweiten Prioritätsanzeigeinformationen eine zweite Priorität der ersten Kommunikationsvorrichtung (120) anzeigen.

2. Verfahren nach Anspruch 1, wobei die erste Kommunikationsvorrichtung (120) vor der lokalen FlexE-Konfiguration mit keinen FlexE-Informationen konfiguriert ist.

3. Verfahren nach Anspruch 1, wobei die FlexE-Konfigurationsinformationen, die lokal auf der ersten Kommunikationsvorrichtung (120) konfiguriert sind, vor dem Erlangen der ersten FlexE-Konfigurationsinformationen dritte FlexE-Konfigurationsinformationen sind, und das Durchführen der lokalen FlexE-Konfiguration basierend auf den ersten FlexE-Konfigurationsinformationen Folgendes umfasst:
Aktualisieren der dritten FlexE-Konfigurationsinformationen unter Verwendung der ersten FlexE-Konfigurationsinformationen.

4. Verfahren nach einem der Ansprüche 1 bis 3, wobei die ersten FlexE-Konfigurationsinformationen die statischen Konfigurationsinformationen sind.

5. Verfahren nach einem der Ansprüche 1 bis 4, wobei das Verfahren vor der lokalen FlexE-Konfiguration ferner Folgendes umfasst:
Senden erster Anzeigeinformationen an die zweite Kommunikationsvorrichtung (110), wobei die ersten Anzeigeinformationen anzeigen, dass die erste Kommunikationsvorrichtung (120) mit keinen FlexE-Informationen konfiguriert ist.

6. Verfahren nach Anspruch 1, wobei die Kennung der zweiten Kommunikationsvorrichtung (110) Folgendes umfasst:
eine Adresse der Medienzugangssteuerung, MAC-Adresse, der zweiten Kommunikationsvorrichtung (110) oder eine Adresse des Internetprotokolls, IP-Adresse, der zweiten Kommunikationsvorrichtung (110).

7. Verfahren nach Anspruch 1, wobei die dritten Anzeigeinformationen eine Kennung der ersten Kommunikationsvorrichtung (120) umfassen.

8. Erste Kommunikationsvorrichtung (120), wobei die erste Kommunikationsvorrichtung (120) einen Speicher und einen Prozessor umfasst;
der Speicher dazu konfiguriert ist, einen Programmcode zu speichern; und
der Prozessor dazu konfiguriert ist, Anweisungen in dem Programmcode auszuführen, um die erste Kommunikationsvorrichtung (120) in die Lage zu versetzen, das Verfahren nach einem der Ansprüche 1 bis 7 durchzuführen.

9. Computerprogramm, umfassend Anweisungen, welche bei Ausführung des Programms durch einen Computer bewirken, dass der Computer alle Schritte des Verfahrens nach einem der Ansprüche 1 bis 7 durchführt.

## Revendications

1. Procédé de configuration automatique Ethernet flexible, FlexE, mis en œuvre par un premier appareil de communication (120), dans lequel le procédé comprend :
l'obtention de premières informations de configuration FlexE envoyées par un second appareil de communication (110) ;
la réalisation d'une configuration FlexE locale basée sur les premières informations de configuration FlexE, de sorte que les deuxièmes informations de configuration FlexE du premier appareil de communication (120) sont cohérentes avec les premières informations de configuration FlexE du second appareil de communication (110), dans lequel les deuxièmes informations de configuration FlexE sont considérées comme cohérentes avec les premières informations de configuration FlexE lorsque les premières informations de configuration FlexE et les deuxièmes informations de configuration FlexE sont identiques, et dans lequel les deuxièmes informations de configuration FlexE sont utilisées pour réaliser la configuration FlexE sur une première interface physique du premier appareil de communication (120) ; et
l'établissement d'une communication FlexE avec le second appareil de communication (110) basée sur les deuxièmes informations de configuration FlexE,
dans lequel le premier appareil de communication (120) est un appareil secondaire, et le second appareil de communication (110) est un appareil principal, et
dans lequel, avant d'obtenir les premières informations de configuration FlexE, le procédé comprend en outre :
la réception de deuxièmes informations d'indication provenant du second appareil de communication (110), dans lequel les deuxièmes informations d'indication comprennent des informations d'indication de première priorité, et les informations d'indication de première priorité indiquent une première priorité du second appareil de communication (110), dans lequel les deuxièmes informations d'indication comprennent un identifiant du second appareil de communication (110) ;
le fait de déterminer, sur la base des deuxièmes informations d'indication, si le premier appareil de communication (120) joue le rôle de l'appareil secondaire et/ou si le second appareil de communication (110) joue le rôle de l'appareil principal ; et
l'envoi de troisièmes informations d'indication, dans lequel les troisièmes informations d'indication indiquent au second appareil de communication (110) de déterminer le rôle du second appareil de communication (110) en tant qu'appareil principal et/ou de déterminer le rôle du premier appareil de communication (120) en tant qu'appareil secondaire, dans lequel les troisièmes informations d'indication comprennent des informations d'indication de seconde priorité, et les informations d'indication de seconde priorité indiquent une seconde priorité du premier appareil de communication (120).

2. Procédé selon la revendication 1, dans lequel, avant la configuration FlexE locale, le premier appareil de communication (120) est configuré sans information FlexE.

3. Procédé selon la revendication 1, dans lequel, avant l'obtention des premières informations de configuration FlexE, les informations de configuration FlexE configurées localement sur le premier appareil de communication (120) constituent les troisièmes informations de configuration FlexE, et la réalisation de la configuration FlexE locale basée sur les premières informations de configuration FlexE comprend :
la mise à jour des troisièmes informations de configuration FlexE à l'aide des premières informations de configuration FlexE.

4. Procédé selon l'une quelconque des revendications 1 à 3, dans lequel les premières informations de configuration FlexE sont des informations de configuration statiques.

5. Procédé selon l'une quelconque des revendications 1 à 4, dans lequel avant la configuration FlexE locale, le procédé comprend en outre :
l'envoi de premières informations d'indication au second appareil de communication (110), dans lequel les premières informations d'indication indiquent que le premier appareil de communication (120) est configuré sans information FlexE.

6. Procédé selon la revendication 1, dans lequel l'identifiant du second appareil de communication (110) comprend :
une adresse de contrôle d'accès au support MAC du second appareil de communication (110), ou une adresse de protocole Internet IP du second appareil de communication (110).

7. Procédé selon la revendication 1, dans lequel les troisièmes informations d'indication comprennent un identifiant du premier appareil de communication (120).

8. Premier appareil de communication (120), dans lequel le premier appareil de communication (120) comprend une mémoire et un processeur ;
la mémoire est configurée pour stocker un code de programme ; et
le processeur est configuré pour exécuter des instructions dans le code de programme, pour amener le premier appareil de communication (120) à réaliser le procédé selon l'une quelconque des revendications 1 à 7.

9. Programme informatique comprenant des instructions qui, lorsque le programme est exécuté par un ordinateur, amènent l'ordinateur à mettre en œuvre les étapes du procédé selon l'une quelconque des revendications 1 à 7.
